(19)

Europäisches
Patentamt
European
Patent Office
Office européen
des brevets

(11) **EP 4 322 384 A1**

(12) **EUROPEAN PATENT APPLICATION**

(43) Date of publication:
**14.02.2024   Bulletin 2024/07**

(21) Application number: **22190091.3**

(22) Date of filing: **12.08.2022**

(51) International Patent Classification (IPC):
*H02M 1/42* $^{(2007.01)}$      *H02M 5/458* $^{(2006.01)}$
*H02M 1/15* $^{(2006.01)}$      *H02M 3/156* $^{(2006.01)}$
*H02M 3/158* $^{(2006.01)}$      *H02M 1/00* $^{(2006.01)}$

(52) Cooperative Patent Classification (CPC):
**H02M 1/4233; H02M 1/0058; H02M 1/12;**
**H02M 1/15;** H02M 1/0085; H02M 3/1586

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Infineon Technologies Austria AG**
**9500 Villach (AT)**

(72) Inventors:
• **AZURZA ANDERSON, Jon**
  **9500 Villach (AT)**
• **DEBOY, Gerald**
  **9061 Klagenfurt (AT)**
• **KASPER, Matthias Joachim**
  **9500 Villach (AT)**

(74) Representative: **Westphal, Mussgnug & Partner,**
**Patentanwälte mbB**
**Werinherstraße 79**
**81541 München (DE)**

(54) **POWER CONVERSION METHOD AND POWER CONVERTER**

(57)    A method for operating PFC rectifier circuit, a control circuit for operating a PFC rectifier, and a power converter circuit are disclosed. The method includes: operating the rectifier circuit (2) in a PFC mode, wherein operating the rectifier circuit (2) in the PFC mode comprises operating the rectifier circuit (2) in a first operating mode or a second operating mode, wherein operating the rectifier circuit (2) in the first operating mode comprises operating a switch (26) in the rectifier circuit (2) at a predefined fixed first switching frequency (fswl), wherein operating the rectifier circuit (2) in the second operating mode comprises operating the switch (26) in the rectifier circuit (2) at a second switching frequency (fsw2) higher than the first switching frequency (fswl), and wherein the method further includes adjusting the second switching frequency (fsw2) dependent on a current ripple parameter ($|Iac_{bf}|$).

FIG 1

EP 4 322 384 A1

**Description**

This disclosure relates in general to a power conversion method and a power converter circuit. In particular, the invention relates to an AC-DC power conversion method and power converter circuit including a PFC rectifier.

Power converters that employ AC-DC power conversion are widely used in various kinds of applications such as battery chargers or DC (direct current) power supplies. AC-DC power conversion includes converting power received from an AC (alternating current) power source into DC power. The AC power source is a power grid, for example. Dependent on the country, an AC voltage provided by the power grid may vary between 90 Vrms and 265Vrms, for example. A voltage level of a DC voltage provided by the AC-DC converter is dependent on the specific application in which the power converter is used and may range from several volts to several 10 volts, for example.

AC-DC power converters may include a PFC (Power Factor Correction) rectifier that is configured to receive the ac power and generate a regulated DC link voltage based on the AC power. At the same time, the PFC rectifier is configured to regulate a waveform of an alternating current received from the AC power source in order to control a power factor.

The PFC rectifier may include electronic switches. Operating the electronic switches is associated with losses, wherein these losses include switching losses and conduction losses. Switching losses are losses associated with switching on and switching off the switches, and conduction losses (ohmic losses) are losses associated with currents flowing through the switches in an on-state.

The switching losses can be reduced by operating the electronic switches under ZVS (zero voltage switching) conditions. ZVS includes switching on a respective switch when a voltage across the switch is zero (has decreased to zero).

There is a need for a method for operating a PFC rectifier in an efficient way.

One example relates to a method. The method includes operating a rectifier circuit in a PFC mode. Operating the rectifier circuit in the PFC mode includes operating the rectifier circuit in a first operating mode or a second operating mode, wherein operating the rectifier circuit in the first operating mode includes operating a switch in the rectifier circuit at a predefined fixed first switching frequency, and wherein operating the rectifier circuit in the second operating mode includes operating the switch in the rectifier circuit at a second switching frequency higher than the first switching frequency. The method further includes adjusting the second switching frequency dependent on a current ripple parameter.

Another example relates to a PFC control circuit. The PFC control circuit is configured to operate a rectifier circuit in a PFC mode, wherein to operate the rectifier circuit in the PFC mode includes to operate the rectifier circuit in a first operating mode or a second operating mode, wherein to operate the rectifier circuit in the first operating mode includes to operate a switch in the rectifier circuit at a predefined fixed first switching frequency, and wherein to operate the rectifier circuit in the second operating mode includes to operate the switch in the rectifier circuit at a second switching frequency higher than the first switching frequency. The PFC control circuit is further configured to adjust the second switching frequency dependent on a current ripple parameter.

Examples are explained below with reference to the drawings. The drawings serve to illustrate certain principles, so that only aspects necessary for understanding these principles are illustrated. The drawings are not to scale. In the drawings the same reference characters denote like features.

Figure 1 schematically illustrates one example of a power converter circuit that includes a PFC rectifier;

Figures 2A - 2C illustrate signal diagrams of an input voltage, an (average) input current, and an input power of the power converter circuit;

Figures 3A - 3C show signal diagrams that illustrate conventional ways for operating a PFC rectifier;

Figure 4 illustrates switching frequency variations in a PFC rectifier operated in accordance with the method according to Figure 3A;

Figure 5 schematically illustrates an input current of the PFC rectifier;

Figures 6A - 6C show signal diagrams of input currents of a rectifier circuit operated at a fixed switching frequency and at different input voltages;

Figure 7 illustrates the efficiency of a rectifier circuit operated at a fixed switching frequency dependent on the input voltage;

Figure 8 illustrates one example of an improved method for operating a rectifier circuit;

Figure 9 shows signal diagrams that illustrate operating a rectifier circuit in accordance with the method according to Figure 8;

Figures 10 - 12 illustrate different examples of a rectifier circuit of the PFC rectifier;

Figure 13 illustrates one example of a PFC control circuit that includes a frequency adjustment circuit and a control circuit;

Figure 14 illustrates one example of the control circuit in detail;

Figure 15 illustrates a rectifier circuit according to another example; and

Figure 16 illustrates one example of a control circuit that is configured to control operation of the rectifier circuit according to Figure 15.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

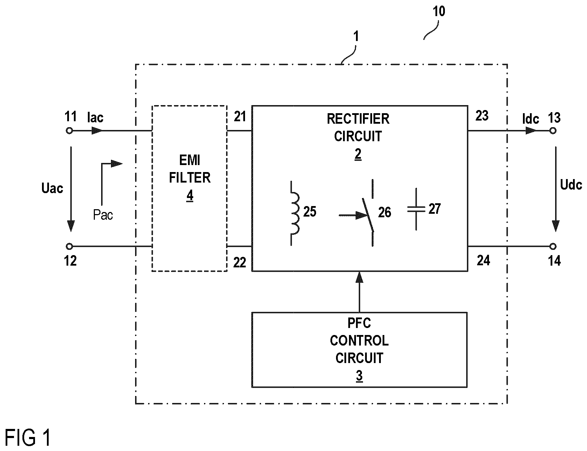

Figure 1 schematically illustrates one example of a power converter circuit 10. The power converter circuit 10 according to Figure 1 includes a PFC (power factor correction) rectifier 1. The PFC rectifier 1 includes an input 11, 12 configured to receive an input voltage Uac and an input current Iac from a power source (not illustrated in Figure 1) and an output 13, 14 configured to provide an output voltage Udc and an output current Idc to a load or load circuit (not illustrated in Figure 1). The PFC rectifier 1 includes a rectifier circuit 2 and a PFC control circuit 3 that is configured to control operation of the rectifier circuit 2.

Optionally, an EMI (electromagnetic interference) filter 4 is connected between the input 11, 12 of the PFC rectifier and an input 21, 22 of the rectifier circuit 2. An output 23, 24 of the rectifier circuit 2 may form the output 13, 14 of the PFC rectifier 1.

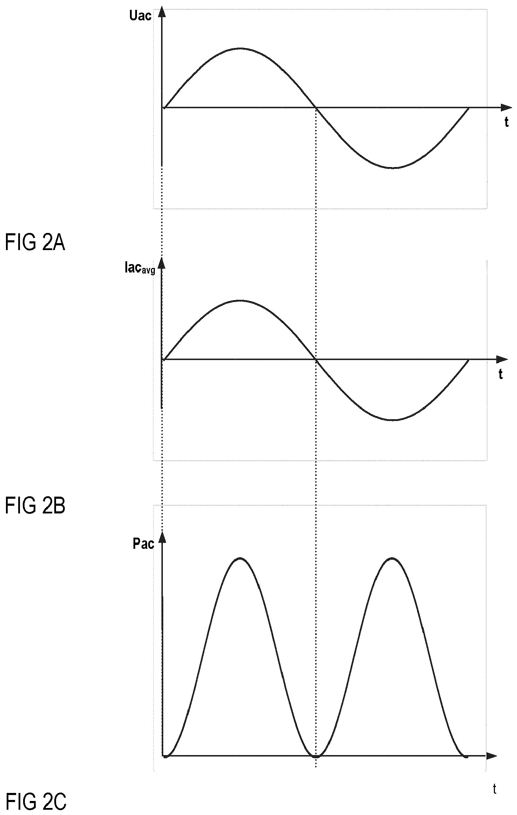

The input voltage Uac is an alternating voltage such as, for example a sinusoidal voltage. The power source providing the alternating input voltage Uac is a power grid, for example. Figure 2A shows a signal diagram of a sinusoidal input voltage Uac during one period of the sinusoidal input voltage Uac. An RMS (Rout Mean Square) value $Uac_{rms}$ of the input voltage Uac and the amplitude Ûac of the input voltage Uac may vary within a certain range, for example, dependent on the country or the location where the power grid is established. Typical RMS values of alternating voltages received from power grids range between 90 Vrms and 265 Vrms. A typical frequency of the grid voltages is 50 Hz or 60 Hz. The amplitude Ûac of a sinusoidal voltage is $\sqrt{2}$ times the RMS value $Uac_{rms}$, $\hat{U}ac = \sqrt{2} \cdot Uac_{rms}$.

The output voltage Udc is a direct voltage and the output current Idc is a direct current.

The PFC control circuit 3 is configured to control operation of the rectifier circuit 2 in a PFC mode. Operating the rectifier circuit 2 in the PFC mode includes operating the rectifier circuit 2 such that that an average input current $Iac_{avg}$ received by the rectifier circuit 2 has a current waveform that is in correspondence with the waveform of the input voltage Uac. Thus, for example, the average input current $Iac_{avg}$ is a sinusoidal input current when the input voltage Uac is a sinusoidal input voltage.

Operating the rectifier circuit 2 in the PFC mode includes operating the electronic switch 26 in a switched mode. Operating the electronic switch 26 in the switched mode includes operating the electronic switch 26 in a plurality of successive drive cycles such that the electronic switch 26 is in an on-state (is switched on) for a certain on-time and is in an off-state (is switched off) for a certain off-time in each drive cycle. The "average input current $Iac_{avg}$" represents an average of the input current in the individual drive cycles.

The rectifier circuit 2 may be operated in such a way that the average input current $Iac_{avg}$ is in phase with the input voltage Uac. In this case, the PFC rectifier 1, from the perspective of the power source, is an ohmic load. A signal diagram of a sinusoidal average input current $Iac_{avg}$ that is in phase with a sinusoidal input voltage Uac is illustrated in Figure 2B. According to another example, the rectifier circuit is operated such that there is a certain phase shift between the average input current $Iac_{avg}$ and the input voltage Uac.

An input power received at the input 11, 12 is given by the input voltage Uac multiplied with the input current Iac, Pac = Uac·Iac. In the following, input power Pac denotes the input voltage Uac multiplied with the average input current $Iac_{avg}$. Thus, when the input voltage Uac is a sinusoidal voltage, for example, and the rectifier circuit 2 is operated in the PFC mode, the input power Pac has a sine-square waveform as illustrated in Figure 2c, so that the input power regularly oscillates between a maximum power level and zero. The oscillating frequency is twice the frequency of the input voltage Uac.

Furthermore, in the following, the average input power $Pac_{avg}$ is given by an average of the input power over one half-period of the input voltage Uac or one period of the input voltage Uac. In the event that the input voltage Uac is provided by a power grid, the (half) period of the input voltage Uac may also be referred to as mains-cycle (half) period or grid-cycle (half) period.

An output power Pdc of the rectifier circuit is given by the output voltage Udc multiplied with the output current Idc, Pdc=UdcIdc. The rectifier circuit 2 includes a capacitor 27 to buffer a difference between the input power Pac and the output power Pdc resulting from the PFC mode. It can be assumed that losses in the PFC rectifier are small as compared to an average input power $Pac_{avg}$, which is given by an average of the input power over one half-period of the input voltage Uac and the average input current $Iac_{avg}$. In this case, the output power Pdc approximately equals the average input power $PaC_{avg}$,

$$Pdc \approx Pac_{avg} \tag{1}.$$

Furthermore, when the input voltage Uac is a sinusoidal voltage and the average input current $Iac_{avg}$ is a sinusoidal current, the average input power $Pac_{avg}$ is 50% of a peak input power,

$$Pac_{avg} = \frac{Pac_{pk}}{2} = \frac{\hat{U}ac \cdot \hat{I}ac_{avg}}{2} \tag{2},$$

where $Pac_{pk}$ denotes the peak input power, and $\hat{I}ac_{avg}$ denotes an amplitude (a peak) of the average input current $Iac_{avg}$. When the average input current is in phase with the input voltage Uac, the peak $\hat{I}ac_{avg}$ of the average input current $Iac_{avg}$ occurs whenever the voltage level of the input voltage Uac equals $\pm \hat{U}ac$.

The rectifier circuit has a boost-type converter topology, so that a voltage level of the output voltage Udc is equal to or higher than the amplitude $\hat{U}ac$ of the input voltage, $Udc \geq \hat{U}ac$. According to one example, the PFC rectifier 1 is configured to regulate the output voltage Udc in accordance with an output voltage reference $Udc^*$. The output voltage reference $Udc^*$ defines a desired voltage level or setpoint of the output voltage Udc. According to one example, regulating the output voltage Udc in accordance with the output voltage reference $Udc^*$ includes regulating the output voltage such that a voltage level of the output voltage Udc at least approximately equals a voltage level defined by the output voltage reference $Udc^*$.

Regulating the output voltage Udc by the PFC rectifier 1 includes regulating the average input power $Pac_{avg}$. According to one example, regulating the average input power $Pac_{avg}$ includes regulating the amplitude $\hat{I}ac_{avg}$ of the average input current $Iac_{avg}$. This is explained in detail herein further below.

For controlling the input current Iac, the rectifier circuit 2 includes an inductor 25 and an electronic switch 26. Controlling operation of the rectifier circuit 2 by the PFC control circuit 3 includes controlling operation of the switch 26. Referring to the above, controlling operation of the switch 26 includes operating the switch in an on-state (switched on state) or an off-state (switched off state). The inductor 25 and the switch 26 are coupled with each other and coupled to the input 21, 22 in such a way that the input current Iac increases and energy is stored in the inductor 25 when the switch 26 is in the on-state, and the input current Iac decreases and energy is transferred to the capacitor 26 and the output 23, 24 when the switch 26 is in the off-state. In this way, the input current Iac can be modulated in order to control waveform and amplitude of the average input current $Iac_{avg}$. Different examples of rectifier circuits 2 operating in this way are explained in detail herein further below.

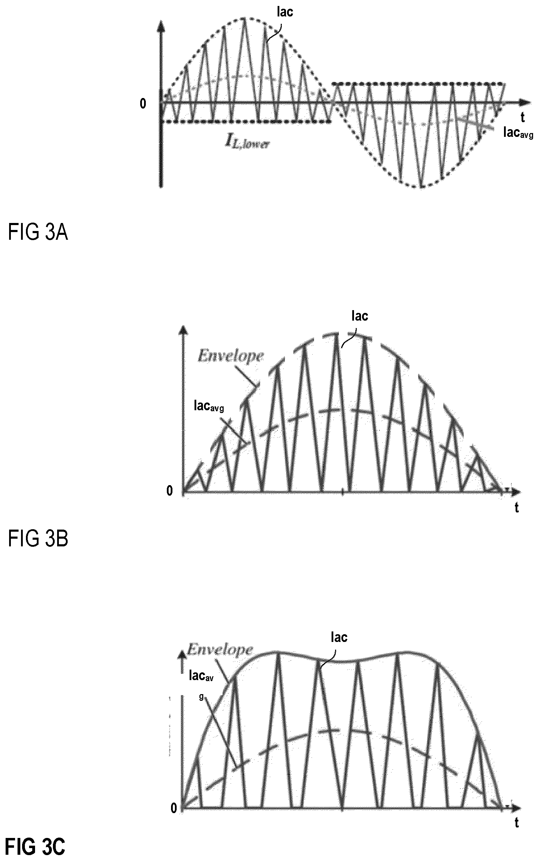

Conventional ways for operating a rectifier circuit 2 in a PFC mode are illustrated in Figures 3A to 3C, wherein each of these Figures 3A to 3C illustrates the input current Iac and the average input current $Iac_{avg}$ during one period or during one half-period of a sinusoidal average input current $Iac_{avg}$. Figure 3A illustrates operating a PFC rectifier circuit in a triangular current mode (TCM). In this operating mode, the input current Iac is modulated such that it alternates in a triangular fashion between a first current level and a second current level. The first current level is negative during the positive half-wave of the average sinusoidal input current $Iac_{avg}$ and is positive during the negative half-wave. The second level defines a sinusoidal envelope.

Figure 3B illustrates operating a PFC rectifier in a critical conduction mode (CrCM). In this operating mode, the input current Iac, in a triangular fashion, alternates between a first level and a second level, wherein the second level defines a sinusoidal envelope. The first level is zero in the critical conduction mode.

Figure 3C illustrates operating a PFC rectifier in a discontinuous conduction mode (DCM). In this operating mode, the input current Iac may be zero for certain time periods.

Operating a PFC rectifier in TCM, CrCM, or DCM is commonly known, so that no further detailed description is required in this regard. In each of these operating modes, the modulation of the input current Iac can be achieved by operating at least one switch in the rectifier circuit 2 in a PWM fashion. In each of these operating modes, zero-voltage switching (ZVS) of the at least one switch is possible. ZVS includes that during an off-state (switched-off state) of the at least one electronic switch a voltage across the electronic switch decreases to zero, which may help to reduce switching losses.

The at least one switch may be operated such that the input current Iac increases when the switch is in an on-state and decreases when the switch is in an off-state. When operating the at least one switch such that the current during the off-state changes is polarity, as in TCM, or decreases to zero, as in CrCM and DCM, the at least one switch can be operated under ZVS conditions.

It should be noted that in Figures 3A to 3C the input current Iac is only schematically illustrated. The frequency of the triangular input current Iac is, usually, significantly higher than the frequency of the average input current Iac$_{avg}$ and the input voltage Uac. The frequency of the input voltage Uac and the alternating average input current Iac$_{avg}$ is 50 Hz or 60 Hz, for example. The frequency of the triangular input current Iac is several ten kilohertz or even several hundred kilohertz, for example.

In each of the three conventional operating modes illustrated in Figure 3A to 3C, the frequency of the triangular input current Iac significantly varies over one half-period of the input voltage Uac and the average input current Iac$_{avg}$. This frequency variation is dependent, inter alia, on the RMS value of the input voltage Uac.

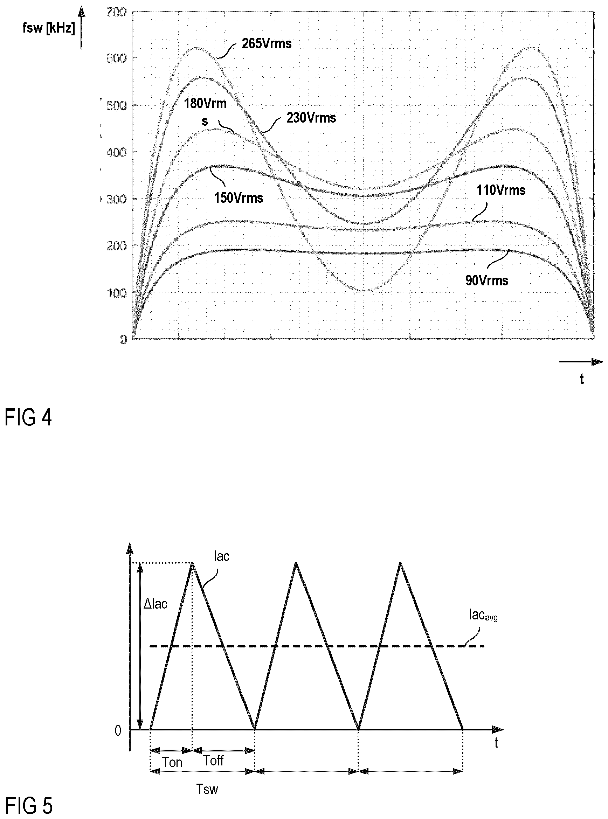

Figure 4 schematically illustrates the frequency variation of the triangular input current Iac in a PFC rectifier that is operated in TCM and generates a fixed output voltage Udc of 400V. Figure 4 illustrates the frequency variation for six different input voltages Uac having RMS values of 90 Vrms, 110 Vrms, 150 Vrms, 180 Vrms, 230 Vrms, and 265 Vrms. As can be seen from Figure 4, the higher the input voltage Uac, the stronger the variations of the frequency of the triangular input current Iac. The frequency of the triangular input current Iac equals the frequency at which the at least one switch in the PFC rectifier is operated. This frequency is also referred to as switching frequency in the following.

Referring to the above, the PFC rectifier 1 may include an EMI filter 4. The EMI filter 4 is configured to attenuate electromagnetic interferences that result from a switched mode operation of the at least one switch in the rectifier circuit 2 in order to comply with governmental regulations. The larger the frequency range of the switched mode operation of the at least one switch, the more complicated is the EMI filter design and the larger is typically the EMI filter. The lowest occurring switching frequency determines the so-called cut-off frequency of the filter, wherein the lower the cut-off-frequency the larger the physical size of inductors included in the EMI filter. Moreover, for operating the PFC rectifier 1 in each of TCM, CrCM, and DCM a zero-crossing detector is required that detects when the input current Iac reaches or crosses zero. The zero-crossing detector requires additional circuitry and may complicate the design of the PFC rectifier 1.

These issues may be overcome by operating the PFC rectifier 2 at a fixed switching frequency. Operating the rectifier circuit 2 at a fixed switching frequency may include operating the switch 26 included in the rectifier circuit 2 at a fixed switching frequency. Operating the switch 26 at the fixed switching frequency may include switching on the switch 26 at the fixed switching frequency or switching off the switch 26 at the fixed switching frequency, wherein on-durations or off-durations may vary dependent on a duty-cycle in order to control the input current Iac. "On-durations" are time durations during which the switch 26 is in the one-state and "off-durations" are time durations in which the switch 26 is in the off-state.

Operating the PFC rectifier 2 at a fixed switching frequency includes selecting a suitable switching frequency value fsw, which is briefly referred to as switching frequency fsw in the following. One example for selecting the frequency value fsw is explained with reference to Figure 5 in the following.

Figure 5 schematically illustrates the input current Iac during several periods of the input current Iac, wherein each of these periods has a duration Tsw. The duration Tsw of one period is the reciprocal of the (fixed) switching frequency fsw,

$$Tsw = \frac{1}{fsw} \tag{3}.$$

The input current Iac has a triangular waveform. In each period, the input current Iac increases during a first time period Ton and decreases during a second time period Toff. The first time period Ton, which may also be referred to as on-time, equals the duration of an on-time (switched on time) of the at least one electronic switch included in the rectifier circuit 2. The second time period Toff, which may also be referred to as off-time, equals a duration of an off-time (switched off time) of the electronic switch 26 included in the rectifier circuit 2. This is explained in detail herein further below.

Figure 5 illustrates an operating scenario in which an instantaneous voltage level of the input voltage Uac is positive. In this case, the input current Iac increases during the on-time Ton and decreases during the off-time Toff.

When the input voltage Uac is negative, the input current Iac decreases during the on-time and increases during the off-time.

The equations provided in the following relate to the positive half-period of the input voltage Uac. The switching frequency fsw that can be obtained from these equations, however, is independent of the type of half-period. That is, the switching frequency fsw that can be obtained from these equations is applicable in both positive half-periods and negative half-periods.

Referring to the above, ZVS can be achieved when the input current Iac reaches or crosses zero in each period, in particular, when the current crosses zero before the switch switches on. Figure 5 illustrates the input current Iac reaching zero in each period. In Figure 5, ∆Iac denotes a peak-to-peak current ripple. The input current Iac reaches or crosses zero in each period, so that ZVS can be achieved, whenever

$$\Delta Iac(t) \geq 2 \cdot Iac_{avg}(t) \tag{4},$$

where $Iac_{avg(t)}$ denotes the average input current which, referring to Figure 2, may vary over the time; and ∆Iac(t) denotes the peak-to-peak current ripple.

In the rectifier circuit 2, the inductor 25 is connected to the input 21 in such a way that during the on-time Ton of the electronic switch 26 the input voltage Uac is applied to inductor 25. Thus, during the on-time Ton, a slope of the input current Iac is given by

$$\frac{dIac(t)}{dt} = \frac{Uac(t)}{L} \tag{5},$$

where $\frac{dIac(t)}{dt}$ denotes the slope of the input current Iac and L denotes an inductance of the inductor 25. Referring to Figure 5, the input current Iac increases during the on-time Ton of the electronic switch 26, so that the peak-to-peak current ripple ∆Iac can be expressed as

$$\Delta Iac(t) = \frac{dIac(t)}{dt} \cdot Ton = \frac{Uac(t)}{L} \cdot Ton \tag{6a}.$$

In the rectifier circuit 2, the on-time of the electronic switch 26 is dependent on a modulation index m(t), which is given by the ratio between the instantaneous voltage level of the input voltage Uac and the voltage level of the output voltage Udc,

$$m(t) = \frac{Uac(t)}{Udc(t)} \tag{7},$$

where Uac(t) denotes the (varying) voltage level of the input voltage Uac, and Udc(t) denotes the voltage level of the output voltage Udc, which may be essentially constant. Referring to the above, the rectifying circuit 2 of the PFC rectifier 1 operates as a boost converter, so that the voltage level of the output voltage Udc is equal to or higher than the amplitude Ûac of the input voltage. Thus m(t) ≤ 1. In this case, the on-time Ton is dependent on the modulation index m(t) as follows,

$$Ton = \left(1 - m(t)\right) \cdot Tsw = \frac{1 - m(t)}{fsw} \tag{8}.$$

Based on equation (8) it can be seen that the lower the input voltage level Uac(t) relative to the output voltage level Udc, the longer the duration of the on-time. Based on equations (6a), (7) and (8), the peak-to-peak current ripple ∆Iac can be expressed as

$$\Delta Iac(t) = \frac{Uac(t)}{L} \cdot \frac{1 - m(t)}{fsw} = \frac{Uac(t)}{L} \cdot \frac{1 - \frac{Uac(t)}{Udc(t)}}{fsw} = \frac{Uac(t) \cdot \left(1 - \frac{Uac(t)}{Udc(t)}\right)}{L \cdot fsw} \tag{6b}.$$

It can be shown that in view of operating the switch 26 under ZVS conditions the operating scenario in which the magnitude of the average input current $Iac_{avg}$ reaches the peak value $\hat{I}ac_{avg}$ of the average input current $Iac_{avg}$ is most critical. Considering equation (2), the peak value $\hat{I}ac_{avg}$ of the average input current $Iac_{avg}$ is given by

$$\hat{I}ac_{avg} = \frac{2 \cdot Pac_{avg}}{\hat{U}ac} \qquad (9).$$

Let $t_{wc}$ be the time instance at which the average input current $Iac_{avg}$ reaches the peak $\hat{I}ac_{avg}$ value, so that $Iac_{avg}(t_{wc})$ = $\hat{I}ac_{avg}$. Considering equation (4b), ZVS at time instance $t_{wc}$ can be achieved whenever

$$\Delta Iac(t_{wc}) \geq 2 \cdot Iac_{avg}(t_{wc}) => \Delta Iac(t_{wc}) \geq 2 \cdot \hat{I}ac_{avg} \qquad (10).$$

For the purpose of explanation it is assumed that the input voltage Uac and the average input current $Iac_{avg}$ are in phase. In this case, the input voltage Uac reaches its peak $\hat{U}ac$ at time instance twc, that is, $Uac(t_{wc})=\hat{U}ac$. Considering equation (6b), the peak-to-peak current ripple $\Delta Iac$ at time instance $t_{wc}$ is given by

$$\Delta Iac(t_{wc}) = \frac{\hat{U}ac \cdot \left(1 - \frac{\hat{U}ac}{Udc}\right)}{L \cdot fsw} \qquad (11).$$

Considering equations (9), (10) and (11), ZVS at time instance $t_{wc}$ can be achieved whenever

$$\frac{\hat{U}ac \cdot \left(1 - \frac{\hat{U}ac}{Udc}\right)}{L \cdot fsw} \geq \frac{4 \cdot Pac_{avg}}{\hat{U}ac} \qquad (13),$$

that is, whenever

$$fsw \leq \frac{\hat{U}ac^2 \cdot \left(1 - \frac{\hat{U}ac}{Udc}\right)}{4 \cdot L \cdot Pac_{avg}} \qquad (14).$$

Referring to the above, the amplitude $\hat{U}ac$ of the input voltage Uac may vary within a certain range (e.g., dependent on the country). Furthermore, the average input power may vary between zero and a predefined maximum average input power. Assuming that the output voltage Udc is regulated and essentially equals a predefined output voltage reference (setpoint voltage) Udc* and assuming that the inductance L is fixed, the rectifier 2 may have a plurality of different operating points that define an operating range, wherein each of these operating points is dependent on the amplitude $\hat{U}ac$ (or the RMS value $Uac_{rms}$) of the input voltage Uac and is dependent on the average input power $Pac_{avg}$ received by the power converter. Based on equation (14), for each operating point, an upper limit switching frequency $fsw_{ul}$ can be obtained, which, based on equation (14) is given by

$$fsw_{ul} = \frac{\hat{U}ac_o^2 \cdot \left(1 - \frac{\hat{U}ac_o}{Udc}\right)}{4 \cdot L \cdot Pac_{avg\_o}} \qquad (15),$$

where $\hat{U}ac_o$ denotes the amplitude of the input voltage at a given operating point and $Pac_{avg\_o}$ denotes the average input power at the given operating point. The upper limit switching frequency $fsw_{ul}$ is the highest possible switching frequency at which ZVS can be achieved in a respective operating point. Based on equation (15), for a given inductance value L, an upper limit switching frequency $fsw_{ul}$ can be determined for each operating point of the rectifier 2. A minimum $min(fsw_{ul})$ of the upper limit switching frequencies obtained for the possible operating range of the rectifier 2 defines a fixed switching frequency that enables ZVS operation of the rectifier 2 throughout the entire operating range.

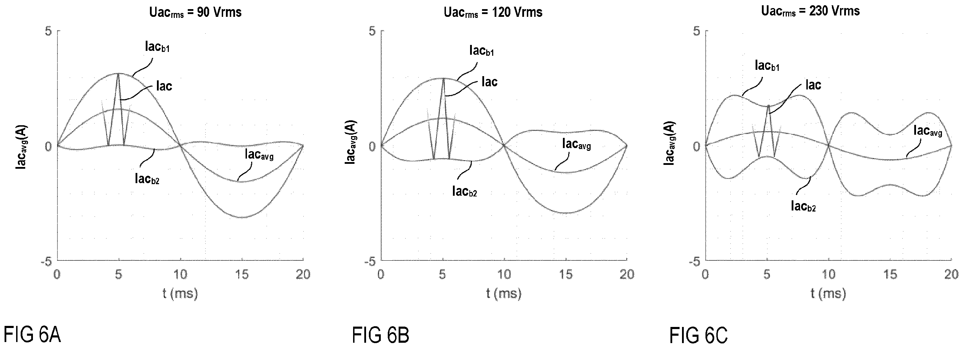

Figures 6A - 6C show signal diagrams that each illustrate one period of the average input current $Iac_{avg}$ of the rectifier 2 when the rectifier 2 is operated at a fixed switching frequency and receives a predefined average input power $Pac_{avg}$. Each of Figures 6A - 6C illustrates operating the rectifier circuit at a an input voltage with a different RMS value, 90 Vrms in Figure 6A, 120 Vrms in Figure 6B, and 230 Vrms in Figure 6C.

In addition to the average input current $Iac_{avg}$, Figures 6A - 6C illustrate first current ripple boundaries $Iac_{b1}$ and second current ripple boundaries $Iac_{b2}$. The input current Iac, which is only schematically illustrated in a respective section in each of Figures 6A - 6C, oscillates (alternates) between these first and second current ripple boundaries $Iac_{b1}$, $Iac_{b2}$. During the positive half-period, the first current ripple boundary $Iac_{b1}$ is an upper current ripple boundary and the second current a ripple boundary $Iac_{b2}$ is a lower current ripple boundary, and during the negative half-period, the second current ripple boundary $Iac_{b2}$ is an upper current ripple boundary and the first current ripple boundary $Iac_{b1}$ is a lower current ripple boundary.

As can be seen from Figures 6A - 6C, at a given average input power $Pac_{avg}$, the higher the higher the amplitude Ûac (and the RMS value $Uac_{rms}$) of the input voltage Uac, the lower the amplitude and the RMS value of the average input current $Iac_{avg}$. The peak-to-peak current ripple $\Delta Iac$ of the input current Iac is given by the upper current ripple boundary minus the lower current ripple boundary, which is equivalent to the sum of the magnitudes of the first and second current ripple boundaries $Iac_{b1}$, $Iac_{b2}$

$$\Delta Iac = |Iac_{b1}| + |Iac_{b2}| \quad (16).$$

Referring to Figures 6A - 6C, the time instances at which maxima of the peak-to-peak current ripple $\Delta Iac$ occur within one period of the average input current $Iac_{avg}$ vary depend on the amplitude Ûac (the RMS value $Uac_{rms}$) of the input voltage. Maxima of the peak-to-peak current ripples $\Delta Iac$ at the different input voltages (90 Vrms, 120Vrms, 230Vrms), however, are in a similar range.

It has been found that the efficiency of the rectifier circuit 2 decreases as a ratio between the current ripple $\Delta Iac$ and the average input current $Iac_{avg}$ increases. In other words, the higher the current ripple $\Delta Iac$ at a given average input current $Iac_{avg}$, the lower the efficiency of the rectifier circuit 2.

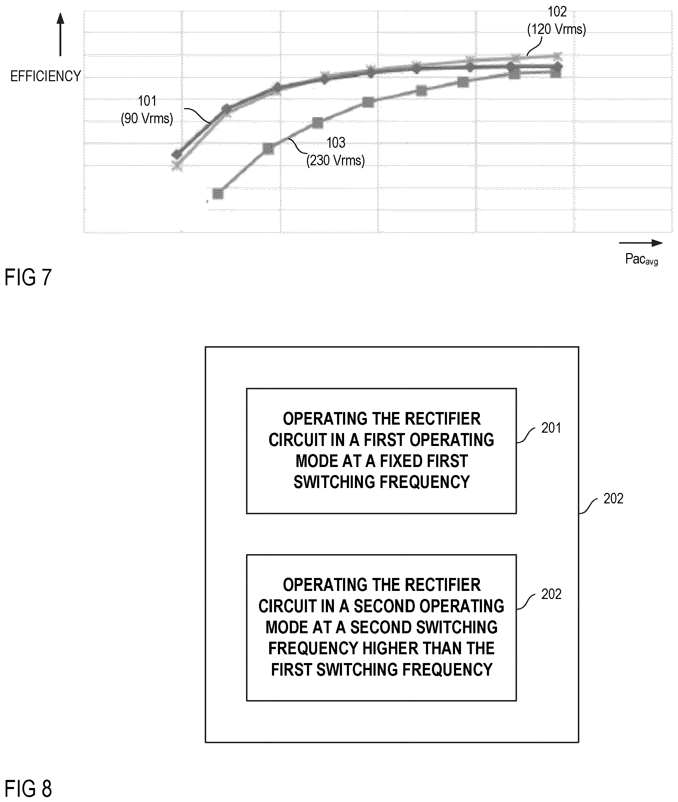

Figure 7 illustrates the efficiency of the PFC rectifier 2 when operated at different input voltages in accordance with Figures 6A - 6C. In Figure 7, the efficiencies are illustrated dependent on the average input power $Pac_{avg}$. Curve 101 illustrates the efficiency of the PFC rectifier to when operated at an input voltage Uac with an RMS value of 90 Vrms, curve 102 illustrates the efficiency of the PFC rectifier 2 when operated at an input voltage Uac with an RMS value of 120 Vrms, and curve 103 illustrates the efficiency of the PFC rectifier 2 when operated at an input voltage Uac with an RMS value of 230 Vrms. As can be seen from Figures 7, the high input voltage with 230 Vrms is associated with a reduced efficiency, in particular when the average input power $Pac_{avg}$ is low.

There is therefore a need for operating PFC rectifier in an efficient way, in particular, such that zero-voltage switching (ZVS) of the at least one switch 26 included in the PFC rectifier 2 can be achieved, and such that a less complicated EMI filter can be used. This is achieved by operating the PFC rectifier 2 in accordance with the method illustrated in Figure 8.

Referring to Figure 8, the method includes operating the rectifier circuit 2 in a first operating mode or a second operating mode. Operating the rectifier circuit 2 in the first operating mode includes operating the rectifier circuit 2 at a first switching frequency fsw1, and operating the rectifier circuit 2 in the second operating mode includes operating the rectifier circuit 2 at a second switching frequency fsw2 that is higher than the first switching frequency fsw1. Operating the rectifier circuit 2 at the first switching frequency fsw1 includes operating the at least one electronic switch 26 included in the rectifier circuit 2 at the first switching frequency, and operating the rectifier circuit 2 at the second switching frequency fsw2 includes operating the at least one electronic switch 26 included in the rectifier circuit 2 at the second switching frequency fsw2.

In this method, in which the fixed first switching frequency fsw1 is lower than the second switching frequency fsw2, the lowest switching frequency of operating the rectifier second 2 is defined by the first switching frequency fsw1. Thus, an EMI filter can be designed in accordance with the first switching frequency.

According to one example, the first switching frequency is selected as explained in context with equation (15), that is, the first switching frequency fsw1 is selected in such a way that, when operating the rectifier circuit 2 at the first switching frequency fsw1, ZVS can be achieved over the entire operating range.

The second switching frequency fsw2 is adjusted dependent on a current ripple parameter in such a way that operating the rectifier circuit 2 at the second switching frequency fsw2 in a certain operating point results in lower current ripples as compared to operating the rectifier circuit 2 at the first switching frequency fsw1 in the same operating point. Thus, operating the rectifier circuit 2 at the second switching frequency results in a higher efficiency. According to one example, the second switching frequency fsw2 is further adjusted dependent on the operating point.

One example for adjusting the second switching frequency fsw2 dependent on the operating point of the rectifier circuit 2 and dependent on a current ripple parameter is explained in the following. As can be seen from equation (6b),

8

the peak-to-peak current ripple $\Delta$Iac is dependent on the instantaneous input voltage Uac(t), the output voltage Udc(t), and the switching frequency fsw. Furthermore, referring to Figures 6A - 6C the first and second current ripple boundaries $Iac_{b1}$, $Iac_{b2}$ are dependent on the average input current $Iac_{avg}$ and the peak-to-peak current ripple $\Delta$Iac. In the positive half-period, for example,

$$Iac_{b1} = Iac_{avg} + \frac{\Delta Iac}{2} \qquad (17a)$$

$$Iac_{b2} = Iac_{avg} - \frac{\Delta Iac}{2} \qquad (17b),$$

and in the negative half-period, for example,

$$Iac_{b2} = Iac_{avg} + \frac{\Delta Iac}{2} \qquad (18a)$$

$$Iac_{b1} = Iac_{avg} - \frac{\Delta Iac}{2} \qquad (18b).$$

The "current ripple parameter" is a parameter that affects the current ripple during operation of the rectifier circuit 2. According to one example, the current ripple parameter is a predefined constant. According to one example, reducing the peak-to-peak current ripple $\Delta$Iac includes defining, as a current ripple parameter, a fixed current ripple boundary in each of the negative and positive half periods of the average input current $Iac_{avg}$. According to one example, this includes defining a fixed lower current ripple boundary $-Iac_{bf}$ during the positive half-period and a fixed upper current ripple boundary $Iac_{bf}$ during the negative half-period. In each of the positive half-period and the negative half-period, the peak-to-peak current ripple $\Delta$Iac associated with this fixed lower and upper report ripple boundary is given by

$$\Delta Iac = 2 \cdot \left( \left| Iac_{bf} \right| + \left| Iac_{avg} \right| \right) \qquad (19).$$

Furthermore, reducing the peak-to-peak current ripple $\Delta$Iac includes adjusting the second switching frequency fsw2 such that during the positive half-period the lower current ripple boundary is fixed to a minimum value of $-Iac_{bf}$ and during the negative half-period the upper current ripple boundary is fixed to a maximum value of $Iac_{bf}$. According to one example, this includes adjusting the second switching frequency fsw2 dependent on the operating point of the rectifier circuit 2 and the magnitude $|Iac_{bf}|$ of the fixed upper and lower current ripple boundaries in accordance with

$$fsw2(t) = \frac{|Uac(t)| \cdot \left( 1 - \frac{\left| Uac(t) \right|}{Udc(t)} \right)}{2 \cdot \left( \left| Iac_{bf} \right| + \left| Iac_{avg}(t) \right| \right) \cdot L} \qquad (20).$$

Equation (20) is based on equation (6b), wherein the peak-to-peak current $\Delta$Iac ripple is in accordance with equation (19). Referring to the above, the second switching frequency fsw2 is adjusted dependent on the operating point of the rectifier circuit 2 and the current ripple parameter. Referring to equation (20), the operating point is defined by the instantaneous value Uac(t) of the input voltage Uac, the instantaneous value $Iac_{avg}(t)$ of the average input current $Iac_{avg}$, and the instantaneous value Udc(t) of the output voltage Udc, wherein the latter may be essentially constant.

As the second switching frequency fsw2 is dependent on the operating point of the rectifier circuit 2 the switching frequency fsw2 may vary dependent on the operating point. According to one example, operating the rectifier circuit 2 in the first operating mode or the second operating mode includes (a) comparing the fixed first switching frequency fsw1 and the second switching frequency fsw2; (b) operating the rectifier circuit 2 in the first operating mode whenever the second switching frequency fsw2, in the respective operating point, is lower than the first switching frequency fsw1; and (c) operating the rectifier circuit number 2 in the second operating mode whenever the second switching frequency fsw2, in the respective operating mode, is higher than the first switching frequency fsw1. In this way, the lowest frequency of operating the rectifier second 2 is defined by the first switching frequency fsw1.

In the example explained before, the decision whether to operate the rectifier circuit 2 in the first operating mode or the second operating mode is taken dependent on comparing the first and second switching frequencies. According to another example, during operation of the rectifier circuit 2, the peak-to-peak current ripple $\Delta$Iac(fsw1) associated with operating the rectifier circuit 2 at the first switching frequency fsw1 is calculated based on equation (6b), for example. That is, the peak-to-peak current ripple is calculated based on equation (6b), wherein the switching frequency fsw is set to be equal to the first switching frequency, fsw=fsw1. Furthermore, the calculated peak-to-peak current ripple is compared with a peak-to-peak current ripple threshold $\Delta$Iac$_{th}$ that is obtained in accordance with equation (19), so that $\Delta Iac_{th} = 2 \cdot (|Iac_{bf}| + |Iac_{avg}|)$. Based on the result of comparing the calculated peak-to-peak current ripple $\Delta$Iac(fsw1) with the peak-to-peak current ripple threshold $\Delta$Iac$_{th}$ the rectifier circuit 2 is operated in the first operating mode or the second operating mode. According to one example, the rectifier circuit 2 is operated in the first operating mode (at the first switching frequency fswl) when the calculated peak-to-peak current ripple $\Delta$Iac(fsw1) is lower than the peak-to-peak current ripple threshold $\Delta$Iac$_{th}$ and is operated in the second operating mode (at the second switching frequency fsw2) when the calculated peak-to-peak current ripple $\Delta$Iac is higher than the peak-to-peak current ripple threshold $\Delta$Iac$_{th}$. The second switching frequency fsw2 may be calculated in accordance with equation (20), for example.

Adjusting the second switching frequency fsw2 in accordance with equation (20) has the effect that the peak-to-peak current ripple is limited (clamped) in accordance with equation (19), so that operating the rectifier circuit 2 at the second switching frequency fsw2 results in a reduced peak-to-peak current ripple as compared to operating the rectifier circuit number 2 at the first switching frequency fsw1.

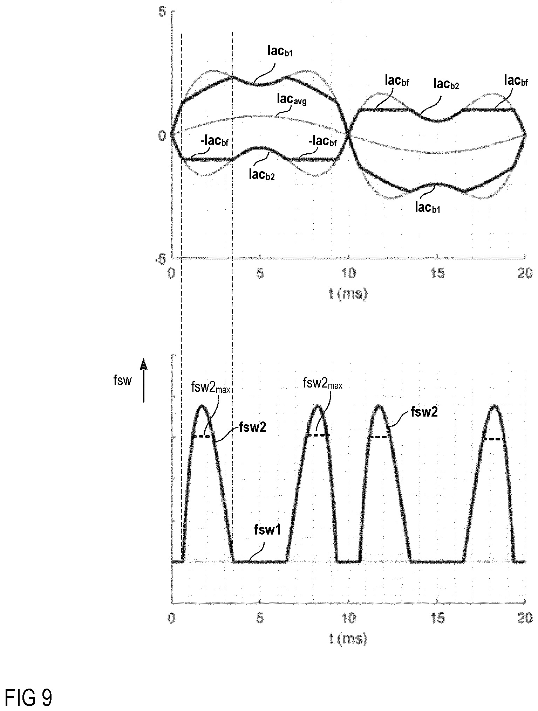

Figure 9 shows signal diagrams that illustrate operating the rectifier circuit 2 in accordance with the method explained with reference to Figure 8 under the same operating conditions as illustrated in Figure 6C. More specifically, Figure 9 shows signal diagrams of the average input current Iac$_{avg}$, the first and second current boundaries Iac$_{b1}$, Iac$_{b2}$, and the switching frequency over one period of the average input current Iac$_{avg}$ and one period of the input voltage Uac.

As can be seen from Figure 9, there are time periods in which the lower current boundary, in the positive half-period, is clamped to -Iac$_{bf}$ and, in the negative half-period, is clamped to Iac$_{bf}$. Such clamping is associated with operating the rectifier circuit 2 at the second switching frequency fsw2, which is higher than the first switching frequency fsw1. Furthermore, as can be seen from Figure 9, the second switching frequency fsw2 dependent on the operating point and, therefore, variable.

In Figure 9, in those time periods, in which the rectifier circuit 2 is operated at the second switching frequency fsw2 the first and second current boundaries that would occur when the rectifier circuit number 2 would be operated at the first switching frequency fsw1 are also illustrated. As can be seen, limiting one of the current ripple boundaries in each of the positive and negative half-period to |Iac$_{bf}$| results in a reduced peak-to-peak current ripple during those time periods in which the rectifier circuit 2 is operated at the second switching frequency fsw2. The reduced peak-to-peak current ripple results in increased efficiency during those time periods in which the rectifier circuit number 2 is operated at the second switching frequency fsw2 and, therefore, results in an increased overall efficiency.

According to one example, the method includes limiting the second switching frequency fsw2 to a maximum frequency value fsw2$_{max}$. This is illustrated in dashed lines in the frequency waveform illustrated in Figure 9. The current waveform associated with operating the rectifier circuit 2 at the maximum switching frequency fsw2$_{max}$ is not illustrated in Figure 9. According to one example, limiting the second switching frequency fsw2 includes comparing the calculated second switching frequency fsw2 with the maximum switching frequency fsw2$_{max}$, and operating the rectifier circuit 2 at the maximum switching frequency fsw2$_{max}$ whenever the calculated second switching frequency fsw2 is higher than the maximum switching frequency fsw2$_{max}$. The second switching frequency is calculated in accordance with equation (20), for example. According to one example, the maximum switching frequency fsw2$_{max}$ is selected from between 1.5 times and 3 times the fixed first switching frequency fsw1.

According to one example, the fixed first switching frequency is between 100 kHz and 500 kHz, for example. As outlined above, the first switching frequency is dependent on the inductance value L and the operating a range of the rectifier circuit 2.

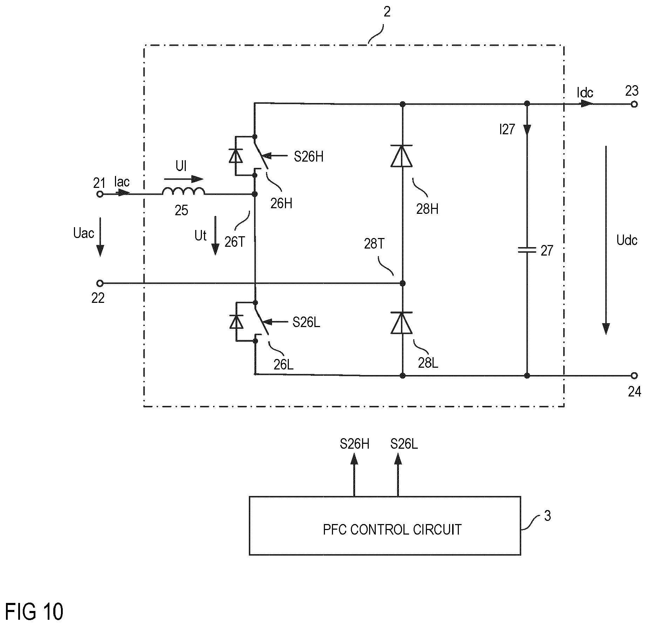

The rectifier circuit 2 may be implemented in various ways. Some examples for implementing the rectifier circuit 2 are explained with reference to Figures 10 - 12 in the following.

Figure 10 illustrates one example of the rectifier circuit 2 in greater detail. In the example shown in Figure 10, the rectifier circuit 2 includes a Totem pole dual boost PFC rectifier topology or, in short, Totem pole topology. The inductor 25 of the rectifier circuit 2 is connected between the input 21, 22 of the rectifier circuit 2 and a tap 26T of a first half-bridge, which may also be referred to as switch half-bridge. More specifically, the inductor 25 is connected between one of the input nodes 21, 22 and the tap 26T. In the example shown in Figure 9, the inductor 25 is connected between the first input node 21 and the tap 26T. This, however, is only an example. According to another example (not illustrated), the inductor 25 is connected between the second input node 22 and a tap 28T of a rectifier half-bridge explained in the following.

Referring to Figure 10, the output capacitor 27 is connected between the output nodes 23, 24.

The switch half-bridge includes a first switch 26H, which is also referred to as high-side switch in the following, and a second switch 26L, which is also referred to as low-side switch in the following. The high-side switch 26H and the low-side switch 26L are connected in series between the output nodes 23, 24 of the rectifier circuit 2 and are connected with one another at the tap 26T.

According to one example, each of the high-side switch 26H and the low-side switch 26L includes a rectifier element that is configured to conduct when a voltage across the respective switch 26H, 26L has a certain polarity. The rectifier element is represented by a diode in the example shown in Figure 9. The high-side switch 26H and the low-side switch 26L may be implemented as a MOSFET, so that the rectifier element may be formed by the body diode of the respective MOSFET. This, however, is only an example. Any other type of electronic switch with an internal rectifier element or any other type of electronic switch having an external rectifier element connected in parallel thereto may be used as well. Further examples of high-side and low-side switches 26H, 26L include HEMTs (High Electron Mobility Transistors, IGBTs (Insulated Gate Bipolar Transistors), or cascode circuits with a normally-on transistor and a normally-off transistors.

Referring to Figure 10, the high-side switch 26H and the low-side switch 26L may be connected between the tap 26T and the first and second output nodes 23, 24 such that the rectifier element of the high-side switch 26H conducts when an electrical potential at the tap 26T is higher than the electrical potential at the first output node 23 and such that the rectifier element of the low-side switch 26L conducts when the electrical potential at the tap 26T is lower than the electrical potential at the second output node 24.

Referring to Figure 10, the rectifier circuit 2 further includes a second half-bridge 28 that is connected between the first and second output nodes 23, 24 and includes a tap 28T that is connected to the input. In the example illustrated in Figure 9, the tap 28T is connected to the second input node 22.

The second half-bridge 28, which may also be referred to as rectifier half-bridge, includes two rectifier elements connected in series between the first and second output nodes 23, 24 and connected with each other at the tap 28T. A first rectifier element 28H is connected between the tap 28T and the first output node 23 and is also referred to as high-side rectifier element in the following, and a second rectifier element 28L is connected between the second output node 24 and the tap 28T and is also referred to as low-side rectifier element in the following. Just for the purpose of illustration, the rectifier elements 28H, 28L are pn diodes in the example shown in Figure 9. However, these rectifier elements may be implemented as Schottky diodes as well.

According to another example, in order to reduce conduction losses, an electronic switch (not shown in Figure 10) is connected in parallel with each of the high-side element 28H and the low-side rectifier element 28L and is switched on by a respective drive circuit whenever the respective rectifier element is forward biased. Implementing a converter stage with a totem pole topology in this way is commonly known, so that no further explanation is required in this regard.

According to one example, the high-side rectifier element 28H is connected between the tap 28T of the second half-bridge 28 and the first output node 23 in such a way that the high-side rectifier element 28H conducts when the electrical potential at the tap 28T is higher than the electrical potential at the first output node 23, and the low-side rectifier element 28L is connected between the second output node 24 and the tap 28T such that the low-side rectifier element 28L conducts when the electrical potential at the second output node 24 is higher than the electrical potential at the tap 28T.

Referring to Figure 10, the PFC control circuit 3 is configured to control operation of the rectifier circuit 2 by providing drive signals S26H, S26L received by the high-side switch 26H and the low-side switch 26L. Examples of the PFC control circuit 3 are explained in detail herein further below.

Referring to the above, the amplitude and the waveform of the average input current $Iac_{avg}$ can be adjusted by suitably controlling on-times and off-times of an electronic switch included in the rectifier circuit. The rectifier circuit 2 according to Figure 10 includes two switches, high-side switch 26H and low-side switch 26L. Dependent on the polarity of the input voltage Uac one of the high-side switch 26H and low-side switch 26L acts as a control switch for controlling the input current Iac and the other one of the high-side switch 26H and low-side switch 26L acts as a rectifier element.

During a positive half-wave (half-period) of the input voltage Uac, the low-side switch 26L acts as the control switch for controlling the input current Iac and the high-side switch 26H acts as a rectifier element. The high-side switch 26H may be switched off throughout the positive half-period of the input voltage Uac or may be switched on and off complementarily to the low-side switch 26L. During the positive half-period of the input voltage Uac, the input current Iac increases whenever the low-side switch 26L is switched on and the input current Iac flows via the inductor 25, the low-side switch 26L and the low-side rectifier element 28L. When the low-side switch 26L switches off, the input current through the inductor 25 decreases and continues to flow via the high-side switch 26H or the parallel rectifier element, the output capacitor 27 and the load circuit (not shown), and the low-side rectifier element 28L.

During a negative half-wave (half-period) of the input voltage Uac, the high-side switch 26H acts as the control switch for controlling the input current Iac and the low-side switch 26L acts as a rectifier element. The low-side switch 26H may be switched off throughout the negative half-period of the input voltage Uac or may be switched on and off complementarily to the low-side switch 26L. During the negative half-period of the input voltage Uac, the average input current is negative. The input current Iac decreases (towards more negative current levels) whenever the high-side switch 26H is switched on and the input current Iac flows via the high-side rectifier element 28H, the high-side switch 26H and the inductor 25. When the high-side switch 26H switches off, the input current through the inductor 25 increases (towards more positive current levels) and continues to flow via the low-side switch 26H or the parallel rectifier element, the output capacitor 27 and the load circuit (not shown), and the high-side rectifier element 28L.

In each case, for controlling the input current lac, the PFC control circuit 3 controls the duty cycle d26 of the switch acting as the control switch at the respective time instance. The duty cycle d26 is given by

$$d26 = \frac{Ton}{Tsw} \hspace{5cm} (21),$$

where Tsw=1/fsw denotes the time duration of one drive cycle of the control switch and equals the duration of one period of the input current lac, and Ton denotes the duration of the on-time of the control switch.

Each of the high-side switch 26H and the low side switch 26L includes an output capacitance, which is a capacitance parallel to the respective switch. The output capacitance is charged whenever the respective switch 26H, 26L switches off and a voltage across the switch 26H, 26L increases. When the current through the inductor 25 is allowed to change its polarity during the off-time of the respective switch 26H, 26L the output capacitance is discharged, so that the voltage across the switch 26H, 26L decreases and the switch 26H, 26L can be switched on under ZVS conditions.

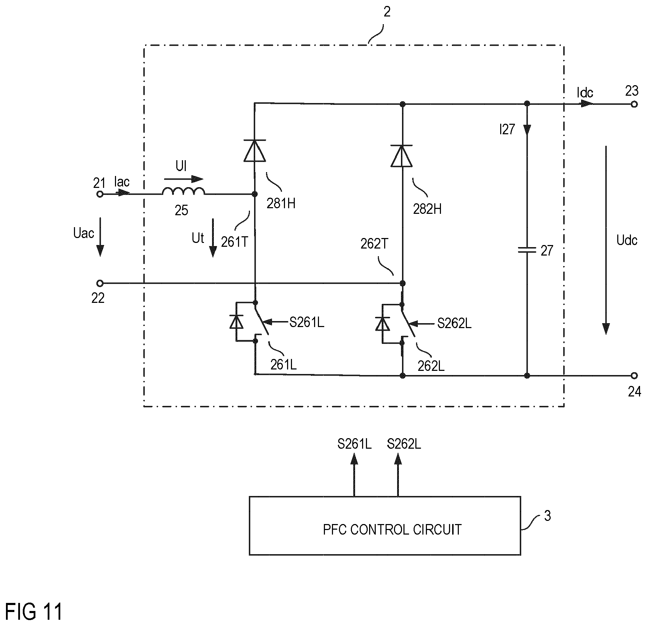

Implementing the rectifier circuit 2 with a totem pole topology is only an example. Any other kind of converter stage having a boost converter topology may be used as well. Further examples of converter stages 2 having a boost converter topology are illustrated in Figures 11 - 12 and are explained in the following.

Figure 11 shows a rectifier circuit 2 which is a modification of the converter stage according to Figure 10. The topology of the rectifier circuit 2 according to Figure 11 may be referred to as double boost PFC rectifier or, in short, double boost topology.

The rectifier circuit 2 according to Figure 11 is different from the rectifier circuit 2 according to Figure 10 in that a first half-bridge, which has a first tap 261T connected to the inductor 25, includes a first low-side switch 261L and a first high-side rectifier element 281H (instead of a high-side switch and a low-side switch) and in that a second half-bridge, which has a second tap 262T connected to the second input node 22, includes a second low-side switch 262L and a second high-side rectifier element 282H (instead of a high-side rectifier element and a low-side rectifier element).

The first high-side rectifier 281H is connected between the tap 261T and the first output node 23 such that it conducts when the electrical potential at the first tap 261T is higher than the electrical potential at the first output node 23. Furthermore, the second high-side rectifier element 282H is connected between the second tap 262T and the first output node 24 such that it conducts when the electrical potential at the tap 262T is higher than the electrical potential at the first output node 23.

Referring to Figure 11, the first and second low-side switches 261L, 262L may each include a rectifier element (freewheeling element) that is configured to conduct when a voltage across the respective switch 261L, 262L has a certain polarity. Referring to Figure 10, the first low-side switch 261L may be connected between the first tap 261T and the second output node 24 such that the rectifier element of the first low-side switch 261L conducts when an electrical potential at the first tap 261T is lower than the electrical potential at the second output node 24, and the second low-side switch 262L of the second half-bridge may be connected between the second tap 262T and the second output node 24 such that the rectifier element of the second low-side switch 262L conducts when an electrical potential at the second tap 262T is lower than the electrical potential at the second output node 24.

In the rectifier circuit 2 according to Figure 11, dependent on the polarity of the input voltage Uac one of the first and second low-side switches 261L, 262L acts as a control switch for controlling the input current lac and the other one of the first and second low-side switches 261L, 262L acts as a rectifier element.

During a positive half-wave (half-period) of the input voltage Uac, the first low-side switch 261L acts as the control switch for controlling the input current lac and the second low-side switch 262L acts as a rectifier element. The second low-side switch 262L may be switched off throughout the positive half-period of the input voltage Uac or may be switched on throughout the positive half-period of the input voltage Uac.

During a positive half-period of the input voltage Uac, the input current lac increases whenever the first low-side switch 261L is switched on and the input current lac flows via the inductor 25, the first low-side switch 261L and the second low-side switch 262L or its rectifier element. When the first low-side switch 261L switches off, the input current through the inductor 25 decreases and continues to flow via the first high-side rectifier element 281H, the output capacitor 27 and the load circuit (not shown), and the second low-side switch 262L or its rectifier element.

During a negative half-wave (half-period) of the input voltage Uac, the second low-side switch 262L acts as the control switch for controlling the input current lac and the first low-side switch 261L acts as a rectifier element. The first low-side switch 261L may be switched off throughout the negative half-period of the input voltage Uac or may be switched on and throughout the negative half-period of the input voltage Uac.

During the negative half-period of the input voltage Uac, the average input current is negative. The input current lac decreases (towards more negative current levels) whenever the second low-side switch 26H is switched on and the input current lac flows via the second low-side switch 262L, the first low-side switch 261L or its rectifier element and the inductor 25. When the second low-side switch 262L switches off, the input current through the inductor 25 increases (towards more positive current levels) and continues to flow via the second high-side rectifier element 282H, the output capacitor 27 and the load circuit (not shown), and the high-side rectifier element 28L, and the first low-side switch 261L or its rectifier element.

Referring to Figure 11, the PFC control circuit 3 is configured to control operation of the rectifier circuit 2 by providing drive signals S261L, S262L received by the first and second low-side switches 261L, 262L. For controlling the input current lac, the PFC control circuit 3 controls the duty cycle d26 of the switch acting as the control switch.

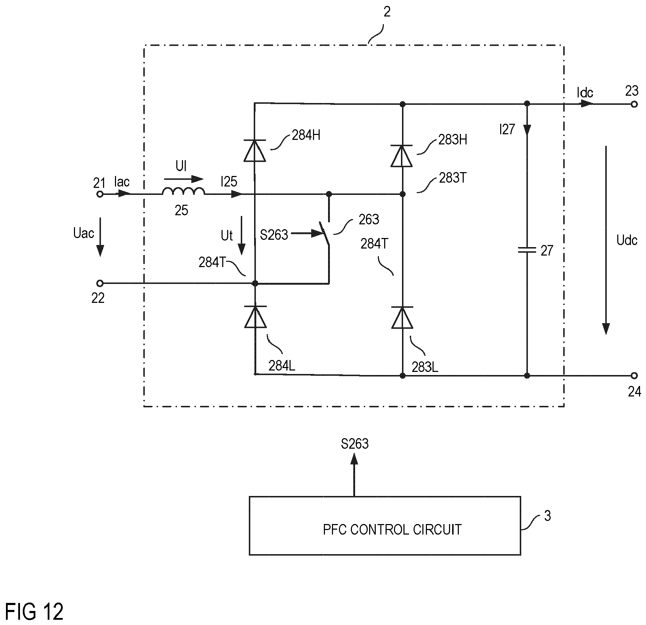

Figure 12 shows a rectifier circuit 2 with a boost converter topology according to another example. The topology of the rectifier circuit 2 shown in Figure 11 may be referred to as H4-PFC rectifier topology or double boost PFC rectifier with bidirectional switch topology.

In addition to the inductor 25 connected to the input 21, 22, the rectifier circuit 2 according to Figure 12 includes two half-bridges that are each connected between the first output node 23 and the second output node 24. Each of these half-bridges includes two rectifier elements 283H, 283L, 284H, 284L connected in series between the first and second output nodes 23, 24. The rectifier elements 283H, 283L, 284H, 284L of each of the first and second half-bridges are connected to one another at a respective tap 283T, 284T, wherein the tap 283 of the first half-bridge is connected to the inductor 25 and the tap 284T of the second half-bridge is connected to one of the input nodes 21, 22. In the example shown in Figure 11, the inductor 25 is connected to the first input node 21 and the tap 284T of the second half-bridge 283 is connected to the second input node 22.

The half-bridges may be implemented with passive rectifier elements such as, for example, pn diodes (as illustrated) or Schottky diodes (not illustrated). Additionally, a respective switch (not shown) may be connected in parallel with each of the rectifier elements 283H, 283L, 284H, 284L, wherein the switch is driven by a respective drive circuit (also not shown) in such a way that the switch switches on when the respective rectifier element is forward biased.

The rectifier elements are connected between the first and second output nodes 23, 24 and the taps 283T, 284T such that a high-side rectifier element 283H of the first half-bridge conducts when the electrical potential at the tap 283T is higher than the electrical potential at the first output node 23; the low-side rectifier element 283L of the first half-bridge conducts when the electrical potential at the second output node 24 is higher than the electrical potential at the tap 283T; a high-side rectifier element 284H of the second half-bridge when an electrical potential at the tap 284T is higher than the electrical potential at the first output node 23; and a low-side rectifier element 284L of the second half-bridge 283 conducts when the electrical potential at the second output node 24 is higher than the electrical potential at the tap 284T.

In addition to the first and second half-bridges, the rectifier circuit 2 includes a switch 263 that is connected between the taps 283T, 284T and that is controlled by the PFC control circuit 3 through a respective drive signal S263. The switch 263 is a bidirectionally blocking switch, for example. The switch 263 acts as a control switch, wherein the PFC control circuit, for controlling the input current lac, adjusts the duty-cycle of the control switch 263.

Referring to Figure 12, the PFC control circuit 3 is configured to control operation of the rectifier circuit 2 by providing a drive signal S263 received by switch 263. For controlling the input current lac, the PFC control circuit 3 controls the duty cycle d26 of switch 263.

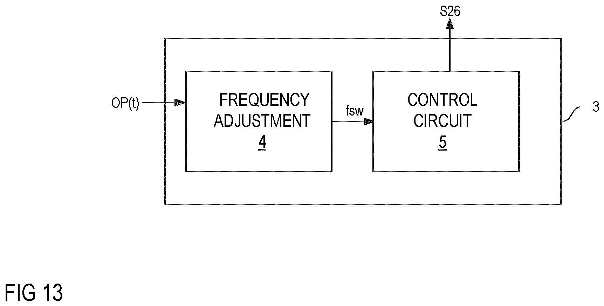

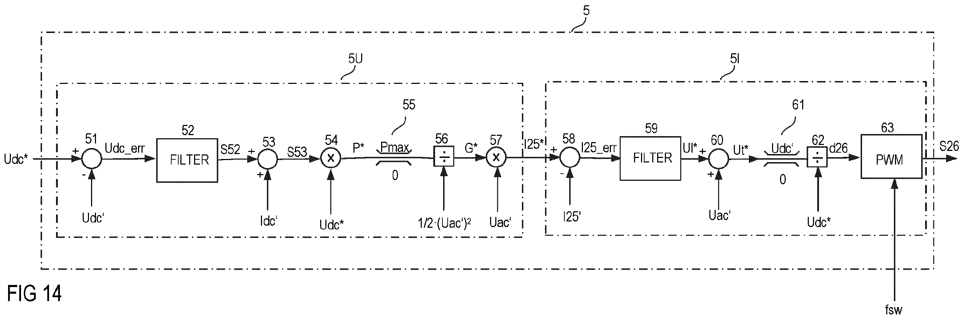

One example of the PFC control circuit 3 that is configured to control operation of the rectifier circuit 2 is explained with reference to Figures 13 and 14 in the following. It should be noted that these figures represent a functionality of the PFC control circuit 3 rather than a specific implementation. The PFC control circuit 3 may be implemented in various ways. According to one example, the PFC control circuit 3 is implemented using dedicated circuitry. According to another example, the PFC control circuit 3 includes a microcontroller and a memory that includes instructions (software) executed by the microcontroller.

Referring to Figure 13, the PFC control circuit 3 includes a frequency adjustment circuit 4 that is configured to adjust the switching frequency fsw in accordance with the method explained with reference to Figure 8. For this, the frequency adjustment circuit 4 receives measurement values that represent the operating point of the rectifier circuit number 2 and are used by the frequency adjustment circuit number 4 to calculate the second switching frequency fsw2. The measurement values may include measurement values of the instantaneous input voltage $U_{ac}(t)$, the instantaneous average input current $Iac_{avg}(t)$, and the instantaneous output voltage $U_{dc}(t)$. These measurement values can be obtained using conventional voltage and current measurement circuits. The measurement values representing the operating point and used by the frequency adjustment circuit 4 to calculate the second switching frequency fsw2 are represented by OP(t) in Figure 13 According to one example, the frequency adjustment circuit 4 calculates the second switching frequency fsw2 in accordance with equation (20).

One or more of the current ripple parameter $Iac_{bf}$, the inductance value L of the inductor 25, and the first switching frequency fsw1 may be stored in the frequency adjustment circuit 4 or may be received by the frequency adjustment circuit 4 (from a controller, for example).

In accordance with the method explained above, the frequency adjustment circuit 4 compares the calculated second switching frequency fsw2 with the fixed first switching frequency fsw1 and outputs, as the switching frequency fsw, the first fixed switching frequency fsw1 or the second variable switching frequency fsw2.

Referring to Figure 13, a control circuit 5 receives the switching frequency fsw and is configured to control operation of the rectifier circuit 2 by generating at least one drive signal S26. Drive signal S26 in Figure 13 represents any one of the drive signals S26H, S26L illustrated in Figure 10, S2611, S262L illustrated in Figure 11, or S263 illustrated in Figure 12 for driving the respective switch(es).

Figure 14 illustrates one example of the control circuit 5 in greater detail. It should be noted that the control circuit 5 according to Figure 14 is only an example. Basically, any kind of control circuit may be used that is configured to control operation of a rectifier circuit in a PFC rectifier in a PFC mode such that an output voltage is in accordance with an output voltage reference.

The control circuit 5 according to Figure 14 includes an output voltage controller (output voltage regulator) 5U that receives an output voltage reference Udc* and a measured output voltage Udc' and is configured to provide an inductor current reference 125*. The measured output voltage Udc' represents the instantaneous voltage level of the output voltage Udc and can be obtained by measuring the output voltage Udc using any kind of voltage measurement circuit. The inductor current reference 125* represents a desired current through the inductor 25.

The output voltage reference Udc* defines a setpoint of the output voltage Udc, so that in a steady-state the output voltage Udc essentially equal the output voltage reference Udc*. According to one example, the output voltage reference Udc* is fixed and is independent of the operating point of the rectifier circuit 2.

According to another example, the output voltage reference Udc* is variable and dependent on the operating point of the rectifier circuit 2. In this example, a respective control circuit adjusts the output voltage reference Udc* dependent on the operating point, in particular, dependent on the amplitude Ûac or the RMS value $Uac_{rms}$ of the input voltage Uac. Referring to equation (15) the upper limit switching frequency $fsw_{ul}$ is also dependent on the output voltage Udc(t). Thus, varying the output voltage Udc(t) dependent on the operating point may help to achieve a particularly high first switching frequency fsw1, wherein achieving a high first switching frequency fsw1 may help to reduce a size of the EMI filter.

Referring to Figure 14, the control circuit 5 further includes a current controller 51 that receives the inductor current reference 125* and a measured inductor current 125' and is configured to generate the drive signal S26 for controlling the control switch. The measured inductor 125' represents the instantaneous current level of the inductor current 125' and can be obtained by measuring the inductor current 125 using any kind of current measurement circuit. According to one example, the measured inductor 125' current represents an average of the instantaneous current level of the inductor current 125' during one drive cycle of the switch 26.

Referring to Figure 13, the output voltage controller 5U includes a subtractor 51 that subtracts a measured output voltage Udc' from the output voltage reference Udc* and provides an error signal Udc_err that represents a difference between the output voltage reference Udc* and the measured output voltage Udc'.

A filter (regulator) 52 receives the error signal Ucd_err and provides a filter output signal S52 based on the error signal Ucd_err. Filter (regulator) 52 has one of a proportional (P), proportional-integral (PI), or proportional-integral-derivative (PID) characteristic, for example. The filter output signal S52 represents a current 127 (see Figures 9, 10, 11) into the output capacitor 27.

An adder 53 adds a measured output current Idc' to the filter output signal S52 and provides an adder output signal S53. The adder output signal S53 represents the overall current of the rectifier circuit 2, that is, the current through the inductor 25. The measured output current Idc' represents the instantaneous current level of the output current Idc and can be obtained by measuring the output current Idc Uac using any kind of current measurement circuit.

A multiplier 54 multiplies the adder output signal S53 with the output voltage reference Udc*. An output signal P* of the multiplier represents a power reference P*, wherein power reference P* represents a desired output power Pdc or a desired average input power. An optional limiter 55 limits the power reference P* such that the power reference P* does not exceed the maximum power Pmax.

Furthermore, a divider 56 receives the power reference P* and divides the power reference by $\frac{1}{2}(\hat{U}ac')^2$ , where Ûac' denotes the measured amplitude of the input voltage Uac, wherein the measured amplitude Ûac' represents the amplitude of the input voltage Uac and may be obtained by measuring the input voltage Uac. An output signal G* of the divider represents a desired conductance of the rectifier circuit 2.

A further multiplier 57 multiplies the desired conductance G* with the measured input voltage Uac'. The measured input voltage Uac' represents the instantaneous voltage level of the input voltage Uac and can be obtained by measuring the input voltage Uac using any kind of voltage measurement circuit. An output signal of the further multiplier 57 represents the inductor current reference 125*.

Referring to Figure 13, the current controller 51 that is configured to regulate the inductor current 251 includes a further subtractor 58 that is configured to subtract the measured inductor current 125' from the inductor current reference 125* to provide an error signal I25_err that represents a difference between the inductor current reference 125* and the measured inductor current 125'.

A further filter (regulator) 59 receives the current error signal I25_err and provides a filter output signal S59 based on the current error signal I25_err. Further filter (regulator) 59 has one of a proportional (P), proportional-integral (PI), or proportional-integral-derivative (PID) characteristic, for example. The filter output signal S59 represents an inductor voltage reference UI*, which is a desired voltage UI across the inductor 25.

An adder 60 adds the inductor voltage reference UI* and the measured input voltage Uac', wherein an adder output signal represents a switch node voltage reference Ut*, which is a desired voltage level of a voltage Ut at the circuit node between the inductor 25 and the control switch. An optional limiter 56 limits the switch node voltage reference Ut* such that the switch node voltage reference Ut* does not exceed the measured input voltage Udc'.

In each of the rectifier circuits according to Figures 10 - 12, for example, the switch node voltage Ut is adjusted by a switched-mode operation of the control switch. The switch node voltage Ut is zero when the control switch is in the on-state and the switch node voltage Ut essentially equals the output voltage Udc when the control switch is in the off-state. Thus, the (average) switch node voltage Ut is given by the duty cycle d26 of the control switch multiplied with the output voltage Udc,

$$Ut = d26 \cdot Udc \hspace{3cm} (22).$$

Referring to Figure 14, considering equation (22), the duty-cycle d26 is obtained by dividing the switch node voltage reference Ut* by the measured output voltage Udc' by a divider 62.

Referring to Figure 14, a PWM modulator 63 receives the duty-cycle d26 and the switching frequency fsw and is configured to generate the drive signal S26 for controlling the control switch in the rectifier circuit 2 in accordance with the duty-cycle d26 and the switching frequency fsw. Controlling the control switch in accordance with the duty cycle d26 and the switching frequency fsw includes, for example, switching on the control switch at the switching frequency fsw and maintaining the control switch in the on-state for a respective on-time Ton that is defined by the duty-cycle d26 and the duration Tsw of one drive cycle, Ton=d26·Tsw, wherein the duration of one drive cycle is the reciprocal of the switching frequency fsw, so that Ton=d26/fsw.

Referring to the above, the rectifier circuit 2 may include two switches, wherein in each of the positive and negative half-periods of the input voltage Uac one of these switches is the control switch. In the examples according to Figures 11 and 12, for example, the when the polarity of the input voltage Uac changes the functionality of acting as a control switch changes from one of the switches to the other one of the switches. Thus, the PWM modulator 63 may receive the measured input voltage Uac' in order to decide which of the switches (S26L or S26H in Figure 10 or S261L or S262L in Figure 11) is the control switch at the respective time instance.

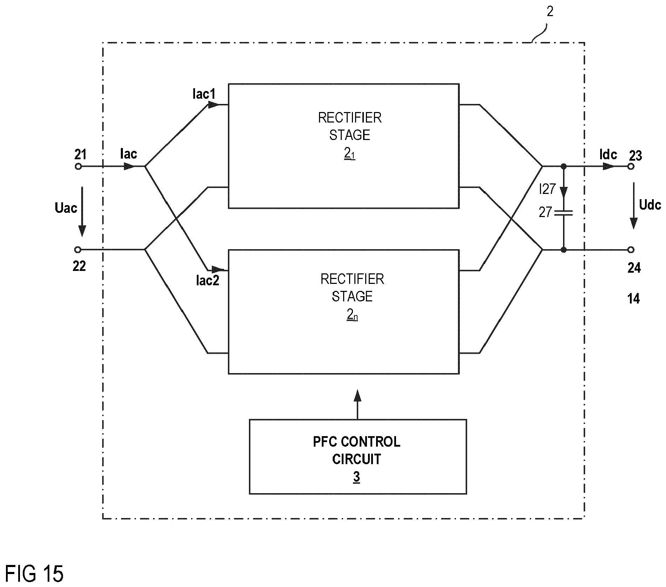

Figure 15 illustrates a rectifier circuit 2 according to another example. The rectifier circuit 2 according to Figure 15 includes several rectifier circuit stages $2_1$, $2_n$ that are connected in parallel between the input 21, 22 and the output 23, 24. According to one example, each of these rectifier stages 21, 22 is in accordance with one of the examples illustrated in Figures 10 - 12, wherein the rectifier stages $2_1$, $2_n$ share the output capacitor 27. Just for the purpose of illustration, the rectifier circuit 2 according to Figure 2 includes two rectifier stages $2_1$, $2_n$ connected in parallel. This, however, is only an example. It is also possible to implement the rectifier circuit 2 with more than two rectifier stages $2_1$, $2_n$ connected in parallel.

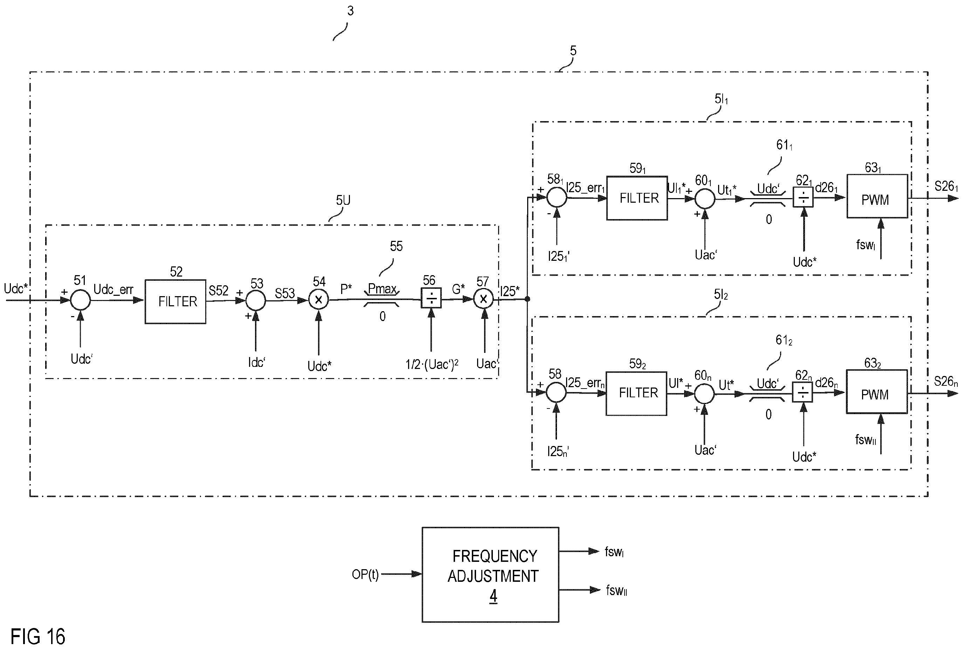

In this example, the PFC control circuit 3 is configured to control operation of both rectifier stages $2_1$, $2_n$. The PFC control circuit 3 may be implemented in accordance with the example illustrated in Figure 13 and include a frequency adjustment circuit 4 and a control circuit 5. One example of a PFC control circuit 3 that is configured to control operation of the rectifier circuit according to Figure 15 with several rectifier stages $2_1$, $2_n$ is illustrated in Figure 16. Just for the purpose of illustration, the PFC control circuit 3 according to Figure 16 is configured to control operation of a rectifier circuit 2 with two rectifier stages. This, however, is only an example. The operating principle of the PFC control circuit 3 according to Figure 16 can easily be applied to APC control circuit that is configured to control operation of more than two rectifier stages. In the PFC control circuit 3 according to Figure 16, the control circuit 5 is different from the control circuit 5 according to Figure 14 in that it includes n current controllers $5I_1$, $5I_n$ that each receive the inductor current reference 125* from the output voltage regulator 5U. Each of the current controllers $5I_1$, $5I_n$ is configured to generate a drive signal S26i, $S26_n$ for the control switch in a respective one of the rectifier stage $2_1$, $2_n$.

Each of the current controllers $5I_1$, $5I_n$ may be implemented in the same way as the current controller 51 illustrated in Figure 14. In Figure 16, like signals and circuit elements as in the example shown in Figure 14 are denoted with the same reference numbers, wherein subscript "1" has been added to the signals and circuit elements of a first one $5I_1$ and subscript "2" has been added to the signals and circuit elements of a second one $5I_2$ of current the current controller $5I_1$, $5I_2$.

Each of the current controllers $5I_1$, $5I_2$ is configured to operate the respective rectifier stage $2_1$, $2_2$ at a respective switching frequency $fsw_I$, $fsw_{II}$ received from the frequency adjustment circuit 4. These switching frequencies $fsw_I$, $fsw_{II}$ are referred to as first and second current controller frequencies in the following. The current controllers $5I_1$, $5I_2$ may be configured to operate the rectifier stages $2_1$, $2_2$ in an interleaved fashion. The latter, however, is only an example.

The frequency adjustment circuit 4 generates each of the first and second controller switching frequencies $fsw_I$, $fsw_{II}$ in the same way as the switching frequency fsw explained hereinabove, wherein the first controller switching frequency $fsw_I$ is received by the PWM circuit $63_1$ in the first current controller $5I_1$, and the second controller switching frequency $fsw_{II}$ is received by the PWM circuit $63_2$ in the second current controller $5I_1$. According to one example, the frequency adjustment circuit 4 is configured to generate the first controller switching frequency $fsw_I$ dependent on the operating point of the first rectifier stage $2_1$, an inductance value of an inductance in the first rectifier stage $2_1$, and a predefined current ripple parameter. Equivalently, in this example, the frequency adjustment circuit 4 is configured to generate the second controller switching frequency $fsw_{II}$ dependent on the operating point of the first rectifier stage $2_1$, an inductance value of an inductance in the second rectifier stage $2_n$, and a predefined current ripple parameter. The operating point of each rectifier stage $2_1$, $2_n$ is given by the instantaneous value Uac(t) of the input voltage Uac received by both rectifier stages $2_1$, $2_n$, the instantaneous value Udc(t) of the output voltage Udc available at the output of both rectifier stages $2_1$, $2_n$, and the average input current $Iac1_{avg}$, $Iac2_{avg}$ received by the respective rectifier stage $2_1$, $2_n$.

In this example, the first and second controller frequencies $fsw_I$, $fsw_{II}$ are generated independently by the frequency adjustment second 4, so that the first and second controller frequencies $fsw_I$, $fsw_{II}$ may be different. In this example, the fixed first switching frequency may be the same for both rectifier stages $2_1$, $2_n$, or may be different.

According to another example, the first and second rectifier stages $2_1$, $2_n$ are implemented with essentially identical topologies and components, and the control circuit 5 is configured to control operation of the rectifier stages $2_1$, $2_n$ in such a way that each of the average input currents $Iac1_{avg}$, $Iac2_{avg}$ is the same portion of an overall average input current received by the rectifier circuit 2, $Iac1_{avg}$ = $Iac2_{avg}$ = $Iac_{avg}/n$. In this example, the frequency adjustment circuit 4 may be configured to generate only one controller switching frequency that is received by the PWM circuits $63_1$, $63_2$ in both current controllers $5I_1$, $5I_2$. This controller switching frequency may be generated based on the operating point of one of the several rectifier stages $2_1$, $2_n$.

In the example explained above, reducing the current ripple when operating the rectifier circuit 2 at the second switching frequency fsw2 includes fixing the lower current ripple boundary in the positive half-period of the average input current, and fixing the upper current ripple boundary in the negative half-period. This has the effect that the rectifier circuit 2 operates in a triangular current mode (TCM) when operated at the second switching frequency fsw2. In this case, the method of operating the rectifier circuit 2 in the first operating mode or the second operating mode, wherein the switching frequency in the first operating mode is fixed and in the second operating mode is adjusted dependent on a current ripple parameter, may be referred to as hybrid TCM.

Some of the aspects explained above are summarized in the following with reference to numbered examples.

Example 1. A method, including: operating a rectifier circuit in a PFC mode, wherein operating the rectifier circuit in the PFC mode includes operating the rectifier circuit in a first operating mode or a second operating mode, wherein operating the rectifier circuit in the first operating mode includes operating a switch in the rectifier circuit at a predefined fixed first switching frequency, wherein operating the rectifier circuit in the second operating mode includes operating the switch in the rectifier circuit at a second switching frequency higher than the first switching frequency, wherein the method further includes adjusting the second switching frequency dependent on a current ripple parameter.

Example 2. The method of example 1, wherein the method further includes adjusting the second switching frequency dependent on an operating point of the rectifier circuit.

Example 3. The method of example 2, wherein adjusting the second switching frequency dependent on the operating point of the rectifier circuit includes adjusting the second switching frequency dependent on at one least of an instantaneous value of an input voltage received by the rectifier circuit, an instantaneous value of an average input current received by the rectifier circuit, and an instantaneous value) of an output voltage provided by the rectifier circuit.

Example 4. The method of any one of the preceding examples, wherein adjusting the second switching frequency further includes adjusting the second switching frequency dependent on an inductance value of an inductor included in the rectifier circuit.

Example 5. The method of any one of examples 1 to 4, wherein operating the rectifier circuit in the first operating mode or the second operating mode includes: comparing the first switching frequency and the second switching frequency; operating the rectifier circuit in the first operating mode when the second switching frequency is lower than the first switching frequency; and operating the rectifier circuit in the second operating mode when the second switching frequency is higher than the first switching frequency.

Example 6. The method of any one of examples 1 to 4, wherein operating the rectifier circuit in The first operating mode are the second operating mode includes: calculating a first switching frequency current ripple associated with operating the rectifier circuit at first switching frequency; comparing the first switching frequency current ripple with a current ripple threshold; operating the rectifier circuit in the first operating mode when the first switching frequency current ripple is higher than the current ripple threshold; and operating the rectifier circuit in the second operating mode when the first switching frequency current ripple is lower than the current ripple threshold.

Example 7. The method of any one of the preceding examples, wherein the method further includes: adjusting the first switching frequency in such a way that a zero-voltage switching operation of the switch in the rectifier circuit is achieved over an entire operating range of the rectifier circuit when operated at the first switching frequency.

Example 8. The method of any one of the preceding examples, wherein operating the rectifier circuit in the PFC mode includes regulating a voltage level of an output voltage of the rectifier circuit in accordance with an output voltage reference and regulating a waveform of an average input current in accordance with a waveform of an input voltage.

Example 9. The method of example 6, wherein regulating the voltage level of the output voltage and the waveform of the average input current includes: calculating a duty-cycle of a switched-mode operation the switch, and operating the switch in the switched-mode dependent on the calculated duty-cycle.

Example 10. The method according to any one of the preceding examples, wherein the rectifier circuit includes two rectifier stages connected in parallel.

Example 11. The method of any one of the preceding examples, wherein the RMS value of the input voltage ranges between 90 Vrms and 265Vrms.

Example 12. The method of any one of the preceding examples, wherein the output voltage reference is adjusted to be within 210V and 400V.

Example 13. A PFC control circuit configured to operate a rectifier circuit in a PFC mode, wherein to operate the rectifier circuit in the PFC mode includes to operate the rectifier circuit in a first operating mode or a second operating mode, wherein to operate the rectifier circuit in the first operating mode includes to operate a switch in the rectifier circuit at a predefined fixed first switching frequency, wherein to operate the rectifier circuit in the second operating mode includes to operate the switch in the rectifier circuit at a second switching frequency higher than the first switching frequency, and wherein the PFC control circuit is further configured to adjust the second switching frequency dependent on a current ripple parameter.

Example 14. The PFC control circuit according to example 13, wherein the PFC control circuit is further configured to adjust the second switching frequency dependent on an operating point of the rectifier circuit.

Example 15. A power converter circuit, including: a PFC control circuit according to example 13; and a rectifier circuit controlled by the PFC control circuit.

**Claims**

1. A method, comprising:

operating a rectifier circuit (2) in a PFC mode,
wherein operating the rectifier circuit (2) in the PFC mode comprises operating the rectifier circuit (2) in a first operating mode or a second operating mode,
wherein operating the rectifier circuit (2) in the first operating mode comprises operating a switch (26) in the rectifier circuit (2) at a predefined fixed first switching frequency (fswl),
wherein operating the rectifier circuit (2) in the second operating mode comprises operating the switch (26) in the rectifier circuit (2) at a second switching frequency (fsw2) higher than the first switching frequency (fswl), and
wherein the method further includes adjusting the second switching frequency (fsw2) dependent on a current ripple parameter ($|Iac_{bf}|$).

2. The method of claim 1,
wherein the method further includes adjusting the second switching frequency (fsw2) dependent on an operating point of the rectifier circuit (2).

3. The method of claim 2,

wherein adjusting the second switching frequency (fsw2) dependent on the operating point of the rectifier circuit (2) comprises adjusting the second switching frequency (fsw2) dependent on at one least of
an instantaneous value (Uac(t)) of an input voltage (Uac) received by the rectifier circuit (2),
an instantaneous value ($Iac_{avg}$(t)) of an average input current ($Iac_{avg}$) received by the rectifier circuit (2), and
an instantaneous value (Udc(t)) of an output voltage provided by the rectifier circuit (2).

4. The method of any one of the preceding claims,
wherein adjusting the second switching frequency (fsw2) further comprises adjusting the second switching frequency (fsw2) dependent on an inductance value (L) of an inductor (25) included in the rectifier circuit (2).

5. The method of any one of claims 1 to 4, wherein operating the rectifier circuit (2) in the first operating mode or the second operating mode comprises:

comparing the first switching frequency (fsw1) and the second switching frequency (fsw2);
operating the rectifier circuit (2) in the first operating mode when the second switching frequency (fsw2) is lower than the first switching frequency (fswl); and
operating the rectifier circuit (2) in the second operating mode when the second switching frequency (fsw2) is higher than the first switching frequency (fsw1).

6. The method of any one of claims 1 to 4, wherein operating the rectifier circuit (2) in The first operating mode are the second operating mode comprises:

calculating a first switching frequency current ripple ($\Delta$Iac(fsw1)) associated with operating the rectifier circuit (2) at first switching frequency;
comparing the first switching frequency current ripple ($\Delta$Iac(fsw1)) with a current ripple threshold ($Iac_{th}$);
operating the rectifier circuit (2) in the first operating mode when the first switching frequency current ripple ($\Delta$Iac(fsw1)) is higher than the current ripple threshold ($Iac_{th}$); and
operating the rectifier circuit (2) in the second operating mode when the first switching frequency current ripple ($\Delta$Iac(fsw1)) is lower than the current ripple threshold ($Iac_{th}$).

7. The method of any one of the preceding claims, wherein the method further comprises:
adjusting the first switching frequency (fsw1) in such a way that a zero-voltage switching operation of the switch (26) in the rectifier circuit (2) is achieved over an entire operating range of the rectifier circuit (2) when operated at the first switching frequency (fsw1).

8. The method of any one of the preceding claims,
wherein operating the rectifier circuit in the PFC mode comprises regulating a voltage level of an output voltage (Udc) of the rectifier circuit in accordance with an output voltage reference (Udc*) and regulating a waveform of an average input current ($Iac_{avg}$) in accordance with a waveform of an input voltage (Uac).

9. The method of claim 6, wherein regulating the voltage level of the output voltage (Udc) and the waveform of the average input current ($Iac_{avg}$) comprises:

calculating a duty-cycle (d26) of a switched-mode operation the switch (26), and
operating the switch (26) in the switched-mode dependent on the calculated duty-cycle (d26).

10. The method according to any one of the preceding claims,
wherein the rectifier circuit (2) includes two rectifier stages ($2_1$, $2_2$) connected in parallel.

11. The method of any one of the preceding claims,

wherein the RMS value ($Uac_{rms}$) of the input voltage (Uac) ranges between 90 Vrms and 265Vrms.

12. The method of any one of the preceding claims, wherein the output voltage reference (Udc*) is adjusted to be within 210V and 400V.

13. A PFC control circuit configured to operate a rectifier circuit (2) in a PFC mode,

   wherein to operate the rectifier circuit (2) in the PFC mode comprises to operate the rectifier circuit (2) in a first operating mode or a second operating mode,
   wherein to operate the rectifier circuit (2) in the first operating mode comprises to operate a switch (26) in the rectifier circuit (2) at a predefined fixed first switching frequency (fswl),
   wherein to operate the rectifier circuit (2) in the second operating mode comprises to operate the switch (26) in the rectifier circuit (2) at a second switching frequency (fsw2) higher than the first switching frequency, and
   wherein the PFC control circuit is further configured to adjust the second switching frequency (fsw2) dependent on a current ripple parameter ($|Iac_{bf}|$).

14. The PFC control circuit according to claim 13,
   wherein the PFC control circuit is further configured to adjust the second switching frequency (fsw2) dependent on an operating point of the rectifier circuit (2).

15. A power converter circuit, comprising:

   a PFC control circuit (3) according to claim 13; and
   a rectifier circuit (2) controlled by the PFC control circuit (3).

10

1

11  Iac

Uac

Pac

12

EMI
FILTER
4

21

22

RECTIFIER
CIRCUIT
2

25

26

27

23  Idc  13

Udc

24  14

PFC
CONTROL
CIRCUIT
3

FIG 1

FIG 2A

FIG 2B

FIG 2C

FIG 3A

FIG 3B

FIG 3C

FIG 4

FIG 5

FIG 6A

FIG 6B

FIG 6C

EP 4 322 384 A1

102
(120 Vrms)

EFFICIENCY

101
(90 Vrms)

103
(230 Vrms)

Pac$_{avg}$

FIG 7

OPERATING THE RECTIFIER
CIRCUIT IN A FIRST OPERATING
MODE AT A FIXED FIRST
SWITCHING FREQUENCY

201

202

OPERATING THE RECTIFIER
CIRCUIT IN A SECOND OPERATING
MODE AT A SECOND SWITCHING
FREQUENCY HIGHER THAN THE
FIRST SWITCHING FREQUENCY

202

FIG 8

FIG 9

FIG 10

FIG 11

FIG 12

S26

OP(t) ──▶ │ FREQUENCY ADJUSTMENT **4** │ ──fsw──▶ │ CONTROL CIRCUIT **5** │   3

FIG 13

FIG 14

FIG 15

FIG 16

**EUROPEAN SEARCH REPORT**

Application Number

EP 22 19 0091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 360 824 A1 (NXP BV [NL]) 24 August 2011 (2011-08-24) | 1-6, 13-15 | INV. H02M1/42 |
| Y | * paragraphs [0016], [0023] – [0026], [0028], [0039], [0041], [0044], [0046], [0049], [0051], [0055]; figures 1-6 * | 7-12 | H02M5/458 H02M1/15 H02M3/156 H02M3/158 H02M1/00 |
| | ----- | | |
| X | JP 2013 005643 A (SUMITOMO ELECTRIC INDUSTRIES; SUMITOMO WIRING SYSTEMS ET AL.) 7 January 2013 (2013-01-07) | 1,13 | |
| A | * paragraphs [0065], [0080], [0081], [0088]; figures 1,7,8 * | 2-12,14, 15 | |
| | ----- | | |
| Y | MA QINGXUAN ET AL: "Digital Interleaving Control for Two-Phase TCM GaN Totem-Pole PFC to Reduce Current Distortion", 2019 IEEE ENERGY CONVERSION CONGRESS AND EXPOSITION (ECCE), IEEE, 29 September 2019 (2019-09-29), pages 3682-3688, XP033666320, DOI: 10.1109/ECCE.2019.8912297 [retrieved on 2019-11-25] * Section II. CURRENT DISTORTION CAUSED BY MASTER-AND- SLAVE CONTROL Equations 11, 12; figures 1-4,6,10-12 * | 7-12,14, 15 | |
| | ----- | | |

TECHNICAL FIELDS SEARCHED (IPC)

H02M

-/--

The present search report has been drawn up for all claims

| Place of search | Date of completion of the search | Examiner |
|---|---|---|
| The Hague | 25 January 2023 | Kanelis, Konstantin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 3

Europäisches
Patentamt

European
Patent Office

Office européen
des brevets

**EUROPEAN SEARCH REPORT**

Application Number

EP 22 19 0091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BIN SU ET AL: "Totem-Pole Boost Bridgeless PFC Rectifier With Simple Zero-Current Detection and Full-Range ZVS Operating at the Boundary of DCM/CCM", IEEE TRANSACTIONS ON POWER ELECTRONICS, INSTITUTE OF ELECTRICAL AND ELECTRONICS ENGINEERS, USA, vol. 26, no. 2, 1 February 2011 (2011-02-01), pages 427-435, XP011334721, ISSN: 0885-8993, DOI: 10.1109/TPEL.2010.2059046 * Section V. EXPERIMENTAL RESULTS, Subsection B. ZVS and ZVS Range Extension operation; figures 1,16 * | 7-12,14, 15 | |
| Y | ALAM MUNTASIR ET AL: "A Soft-Switching Bridgeless AC-DC Power Factor Correction Converter", IEEE TRANSACTIONS ON POWER ELECTRONICS, INSTITUTE OF ELECTRICAL AND ELECTRONICS ENGINEERS, USA, vol. 32, no. 10, 1 October 2017 (2017-10-01), pages 7716-7726, XP011648968, ISSN: 0885-8993, DOI: 10.1109/TPEL.2016.2632100 [retrieved on 2017-05-10] * Section VI. CONCLUSION; figures 1,2,7,10 * | 7-12,14, 15 | TECHNICAL FIELDS SEARCHED (IPC) |
| A | CN 114 679 047 A (GUANGDONG AMERICAN REFRIGERATION EQUIPMENT LTD COMPANY ET AL.) 28 June 2022 (2022-06-28) * abstract; figures 4-7 * | 1-15 | |

-/--

The present search report has been drawn up for all claims

| Place of search | Date of completion of the search | Examiner |
|---|---|---|
| The Hague | 25 January 2023 | Kanelis, Konstantin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**EUROPEAN SEARCH REPORT**

Europäisches Patentamt
European Patent Office
Office européen des brevets

Application Number

EP 22 19 0091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 211 872 B1 (JANG YUNGTAEK [US] ET AL) 28 December 2021 (2021-12-28) * figure 8 * ----- | 1-15 | |
| A | US 2014/103861 A1 (CARLETTI ANDREA [DE] ET AL) 17 April 2014 (2014-04-17) * pages 1a,2c,5a; figure 2c * ----- | 1-15 | |

TECHNICAL FIELDS SEARCHED (IPC)

The present search report has been drawn up for all claims

| Place of search | Date of completion of the search | Examiner |
|---|---|---|
| The Hague | 25 January 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 22 19 0091

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2023

| Patent document cited in search report | | Publication date | Patent family member(s) | | Publication date |
|---|---|---|---|---|---|
| EP 2360824 | A1 | 24-08-2011 | CN | 102118107 A | 06-07-2011 |
| | | | EP | 2360824 A1 | 24-08-2011 |
| | | | US | 2011261599 A1 | 27-10-2011 |
| JP 2013005643 | A | 07-01-2013 | NONE | | |
| CN 114679047 | A | 28-06-2022 | NONE | | |
| US 11211872 | B1 | 28-12-2021 | CN | 114362565 A | 15-04-2022 |
| | | | EP | 3975403 A1 | 30-03-2022 |
| | | | JP | 2022055358 A | 07-04-2022 |
| | | | TW | 202213919 A | 01-04-2022 |
| | | | US | 11211872 B1 | 28-12-2021 |
| US 2014103861 | A1 | 17-04-2014 | CN | 103731022 A | 16-04-2014 |
| | | | DE | 102013111386 A1 | 12-06-2014 |
| | | | US | 2014103861 A1 | 17-04-2014 |
| | | | US | 2016043588 A1 | 11-02-2016 |

EPO FORM P0459

For more details about this annex : see Official Journal of the European Patent Office, No. 12/82